# EUROPEAN PATENT APPLICATION

(11) **EP 4 746 077 A1**
(43) Date of publication of application: **20.05.2026**
(21) Application number: 24839848.9
(22) Date of filing: 22.03.2024
(51) Int. Cl.: H01M 4/62, H01M 4/133, H01M 4/134, H01M 10/052, H01M 4/02

(54) **NEGATIVE ELECTRODE FOR ALL-SOLID-STATE BATTERY AND ALL-SOLID-STATE BATTERY INCLUDING SAME**

(30) Priority: 10.07.2023 KR 20230089273
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); SHIN, Hyuksoo, Yongin-si, Gyeonggi-do 17084 (KR); SOHN, Juhee, Yongin-si, Gyeonggi-do 17084 (KR); LEE, Jungho, Yongin-si, Gyeonggi-do 17084 (KR); JUNG, Sungwon, Yongin-si, Gyeonggi-do 17084 (KR)
(74) Representative: Michalski Hüttermann & Partner Patentanwälte mbB
(86) International application number: PCT/KR2024/003655
(87) International publication number: WO 2025/014027

(57) **Abstract**

Disclosed are a negative electrode for an all-solid-state battery and an all-solid-state battery including, the negative electrode for an all-solid-state battery including a current collector, and a negative electrode coating layer on the current collector, wherein the negative electrode coating layer includes a first region adjacent to the current collector and a second region not adjacent to the current collector, and the first region and the second region includes M-X (M is a metal reactive with lithium, and X is a halogen or a nitride), M, and amorphous carbon, and an amount of M-X included in the first region is greater than an amount of M-X included in the second region.

## Description

### TECHNICAL FIELD

A negative electrode for an all-solid-state battery and an all-solid-state battery including the same are disclosed.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

An all-solid-state battery among rechargeable lithium batteries refers to a battery in which all materials are solid, and in particular, a battery using a solid electrolyte.

### DETAILED DESCRIPTION OF THE INVENTION

### TECHNICAL PROBLEM

An embodiment provides a negative electrode for an all-solid-state battery exhibiting excellent electrochemical properties.

Another embodiment provides an all-solid-state battery including the negative electrode.

### TECHNICAL SOLUTION

An embodiment provides a negative electrode for an all-solid-state battery including a current collector; and a negative electrode coating layer on the current collector, wherein the negative electrode coating layer includes a first region adjacent to the current collector and a second region not adjacent to the current collector, the first region and the second region include M-X (M is a metal reactive with lithium, and X is a halogen or a nitride), M and amorphous carbon, and an amount of M-X included in the first region is greater than an amount of M-X included in the second region.

Another embodiment provides an all-solid-state battery including the negative electrode; a positive electrode; and a solid electrolyte layer between the negative electrode and the positive electrode.

### ADVANTAGEOUS EFFECTS

The negative electrode for an all-solid-state battery according to an embodiment may exhibit excellent electrochemical characteristics.

### BRIEF DESCRIPTION OF THE DRAWINGS

FIG. 1 is a schematic view of the negative electrode of an all-solid-state battery according to an embodiment.
FIG. 2 is a schematic view of an all-solid-state battery according to another embodiment.
FIG. 3 is a schematic view of an all-solid-state battery according to another embodiment.

### BEST MODE FOR PERFORMING INVENTION

Hereinafter, embodiments of the present invention will be described in detail. However, these embodiments are merely examples, the present invention is not limited thereto, and the present invention is defined by the scope of claims.

The terminology used herein is used to describe embodiments only, and is not intended to limit the present disclosure. Expressions in the singular include a plurality of expressions unless the context clearly dictates otherwise.

As used herein, "combination thereof" means a mixture, a laminate, a composite, a copolymer, an alloy, a blend, a reaction product, and the like of the constituents.

Here, the term "comprise," "include" or "have" are intended to designate that the performed characteristics, numbers, step, constituted elements, or a combination thereof is present, but it should be understood that the possibility of presence or addition of one or more other characteristics, numbers, steps, constituted element, or a combination do not be precluded in advance.

The drawing shows that the thickness is enlarged in order to clearly show the various layers and regions, and the same reference numerals are given to similar parts throughout the specification. It will be understood that when an element such as a layer, film, region, or substrate is referred to as being "on" another element, it may be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

Unless otherwise defined in this specification, particle diameter or size may be an average particle diameter. This average particle size refers to the average particle size (D50), which means the diameter of particles with a cumulative volume of 50 volume% in the particle size distribution. The average particle diameter (D50) may be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the average particle diameter (D50) value may be easily obtained through a calculation.

A negative electrode for an all-solid-state battery according to an embodiment includes a current collector and a negative electrode coating layer on the current collector. This negative electrode coating layer includes amorphous carbon, metal, and M-X.

In an embodiment, the negative electrode coating layer refers to a layer that helps lithium ions deintercalated from the positive electrode active material move toward the negative electrode during charging and discharging of an all-solid-state battery to facilitate precipitation on the surface of the current collector. That is, a lithium-containing layer is formed between the current collector and the negative electrode coating layer due to precipitation of lithium ions, and the lithium-containing layer serves as a negative electrode active material, and this negative electrode is generally referred to as a precipitation-type negative electrode.

The negative electrode coating layer includes a first region adjacent to the current collector and a second region not adjacent to the current collector. Herein, the first region and the second region include M-X (M is a metal capable of reacting with lithium, and X is a halogen or a nitride), M, and amorphous carbon, and an amount of M-X included in the first region is greater than an amount of M-X included in the second region.

In an embodiment, M may be a metal capable of reacting with lithium, for example, Ag, Au, Sn, Zn, Al, Mg, Ge, Cu, In, Ni, Bi, Pt, Pd, or a combination thereof. In another embodiment, M may be Ag.

Additionally, X may be a halogen or a nitride. The halogen may be F, CI, Br, I, or a combination thereof, and may be F, Cl or a combination thereof. Additionally, in the case of the nitride, X may be NO₃, NO₂, N, or a combination thereof.

For example, if M is Ag and X is F, then M-X means AgF. Also, if M is Ag and X is nitride, M-X means AgNO₃, AgNO₂, or Ag₃N.

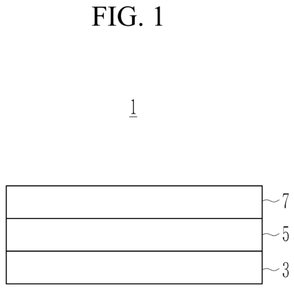

In an embodiment, a negative electrode coating layer including a first region adjacent to the current collector and a second region not adjacent to the current collector is described with reference to FIG. 1. As shown in Fig. 1, the negative electrode coating layer constituting the negative electrode 1 may be present in two regions, the first region 5 located adjacent to the current collector 3, and the second region 7 not adjacent to the current collector 3 and located on the surface of the negative electrode 1.

Because the second region is located on the surface of the negative electrode, in an all-solid-state battery including this negative electrode, the second region may come into contact with the solid electrolyte layer.

According to an embodiment, the negative electrode coating layer is present in two regions, and the M-X may be included in both the first region and the second region, and in this case, an amount of M-X included in the first region may be greater than an amount of M-X included in the second region.

In an embodiment, if M-X is included in the negative electrode coating layer, for example, in the negative electrode coating layer of a precipitation-type negative electrode, particularly if it is present in an excess amount in the first region compared to the second region, in preparation of a lithium-containing layer on the current collector, lithium may be uniformly stacked, and also the formation of lithium dendrites may be effectively suppressed. Additionally, M-X may also serve as a negative electrode active material.

In addition, because the M-X is located in excess in the first region that is in contact with the current collector than in the second region that is not in contact with the current collector, a volume change that may be caused by the M-X reacting with lithium ions may occur primarily on the current collector side. Accordingly, because shear strength due to volume change is hardly applied to the solid electrolyte layer, a phenomenon of the solid electrolyte layer breaking may be suppressed, the occurrence of a short circuit may be suppressed, and the long cycle-life characteristics may be improved.

If M-X is included in the second region in an amount greater than that in the first region, the shear force due to volume expansion is mainly transmitted to the solid electrolyte layer that the second region contacts, and thus a short circuit may occur due to the solid electrolyte layer being broken.

In an embodiment, the amount of M-X included in the first region may be 2 wt% to 80 wt%, 5 wt% to 75 wt%, or 7 wt% to 70 wt% based on 100 wt% of the total first region.

The amount of M-X included in the second region may be 1 wt% to 50 wt%, 2 wt% to 50 wt%, 2 wt% to 40 wt%, or 3 wt% to 30 wt% based on 100 wt% of the total second region.

In an embodiment, a ratio of the amount of M-X included in the first region to the amount of M-X included in the second region may be 1.2:1 to 10:1, 1.4:1 to 9:1, or 3:1 to 9:1.

If the amount of M-X included in the first region and second region is within the above range, lithium may be more uniformly stacked on the current collector without additional reaction with lithium during charging, and lithium dendrite formation may be more effectively suppressed.

Additionally, the total amount of M-X included in the negative electrode coating layer according to an embodiment (i.e., the total amount of M-X included in the first region and second region) may be 5 wt% to 70 wt% or 5 wt% to 60 wt% based on 100 wt% of the total negative electrode coating layer. If the total M-X amount is within the above range, lithium may be more uniformly stacked on the current collector, and lithium dendrite formation may be more effectively suppressed.

In an embodiment, M may be included in both the first region and the second region. The M may be the same M as M-X.

In an embodiment, the amount of M included in the first region may be the same as or different from the amount of M included in the second region.

In an embodiment, the amount of M included in the first region may be 1 wt% to 45 wt%, 1 wt% to 30 wt%, 1 wt% to 20 wt%, 1 wt% to 15 wt%, or 1 wt% to 10 wt% based on 100 wt% of the total first region.

The amount of M included in the second region may be 1 wt% to 45 wt%, 1 wt% to 30 wt%, 1 wt% to 20 wt%, 1 wt% to 15 wt%, or 1 wt% to 10 wt%, based on 100 wt% of the total second region.

The M may be a nanoparticle, and the size of the nanoparticle may be, for example, an average size of 5 nm to 80 nm, but a nanometer size may be suitably used.

In an embodiment, a thickness of the first region may be greater than or equal to 20% and less than 80% in the thickness direction, may be greater than or equal to 20% and less than or equal to 50%, or may be greater than or equal to 20% and less than or equal to 40% based on 100% of the total thickness of the negative electrode coating layer. The thickness of the second region is the value obtained by excluding the thickness of the first region from the negative electrode coating layer.

In an embodiment, the amorphous carbon may be included in both the first region and the second region. Therefore, in the negative electrode coating layer according to an embodiment, amorphous carbon may be located throughout.

The amorphous carbon may be carbon black, acetylene black, denka black, ketjen black, furnace black, activated carbon, or a combination thereof. An example of the carbon black is Super P (Timcal). The amorphous carbon may be carbon black, acetylene black, denka black, ketjen black, or a combination thereof.

Additionally, the amorphous carbon may be present in an amount of 20 wt% to 99 wt%, 40 wt% to 90 wt%, or 50 wt% to 85 wt% based on 100 wt% of the total weight of the negative electrode coating layer. The amounts of amorphous carbon in each of the first and second regions may be the same or different, and there is no need to limit the amounts of amorphous carbon in each region, that is, in the first region and second region. For example, if the amorphous carbon amount is 20 wt% based on 100 wt% of the total weight of the negative electrode coating layer, 10 wt% (20 wt% based on 100 wt% of the total first region) may be included in the first region, and 10 wt% (20 wt% based on 100 wt% of the total second region) may be included in the second region.

The amorphous carbon may be a single particle or may be an aggregate having a secondary particle form in which primary particles are aggregated. If the above amorphous carbon is a single particle, it may be an amorphous carbon particle having an average particle diameter of less than or equal to 100 nm, for example, a nanosize of 10 nm to 100 nm.

In addition, if the amorphous carbon is an aggregate, the particle size of the primary particle may be 20 nm to 100 nm, and the particle size of the secondary particle may be 1 µm to 20 µm.

In an embodiment, the particle size of the primary particles may be 20 nm to 90 nm, 30 nm to 90 nm, or 30 nm to 80 nm.

In an embodiment, the particle size of the secondary particles may be 2 µm to 15 µm, 3 µm to 15 µm, or 3 µm to 10 µm.

The shape of the primary particles may be spherical, elliptical, plate-shaped, and a combination thereof. In an embodiment, the shape of the primary particles may be spherical, elliptical, and a combination thereof.

The negative electrode coating layer may further include a binder. If the negative electrode coating layer is composed of the first region and the second region, the binders included in the first region and the second region may be the same.

The binder may include a non-aqueous binder, an aqueous binder, or a combination thereof.

The non-aqueous binder may include, for example, polyvinylchloride, carboxylated polyvinylchloride, polyvinyl fluoride, polyethylene oxide, an ethylene propylene copolymer, polystyrene, polyvinylpyrrolidone, polyurethane, polytetrafluoroethylene, polyvinylidene fluoride, polyethylene, polypropylene, polyamideimide, polyimide, polyacrylate, or a combination thereof.

The aqueous binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be selected from polyethylene oxide, polyvinyl pyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and a combination thereof.

If an aqueous binder is used as the negative electrode binder, it may include a cellulose-based compound. For example, a cellulose-based compound may be used together with the aqueous binder as an aqueous binder.

The cellulose-based compound may include carboxymethyl cellulose, hydroxypropylmethyl cellulose, methyl cellulose, an alkali metal salt thereof, or a combination thereof. The alkali metal may be Na, K, or Li. The cellulose-based compound may act as a binder and also as a thickener that provides viscosity. Accordingly, there is no need to specifically limit the amount of the cellulose-based compound, but it may be, for example, 0.1 parts by weight to 3 parts by weight based on 100 parts by weight of the negative electrode active material.

The binder is not limited thereto, and any binder used in the relevant technical field may be used, and the amount of the binder may also be appropriately adjusted.

The binder may be included in an amount of 1 wt% to 15 wt% based on 100 wt% of the total negative electrode coating layer, for example, the binder may be included in an amount of 2 wt% to 12 wt%, 2 wt% to 10 wt%, or 2 wt% to 8 wt% based on 100 wt% of the total negative electrode coating layer. The amounts of the binder contained in each of the first and second regions may be the same or different, and there is no need to limit the binder amounts in each region, i.e., in the first and second regions. For example, if the binder amount is 10 wt% based on 100 wt% of the total weight of the negative electrode coating layer, it may be included in an amount of 5 wt% in the first region and in an amount of 5 wt% in the second region.

If the binder is included in the negative electrode coating layer of the all-solid-state battery within the above amount range, the electrical resistance and adhesive strength may be improved, thereby improving the characteristics (battery capacity and power characteristics) of the all-solid-state battery.

The negative electrode coating layer may further include additives such as a filler, a dispersant, or an ion conductive material. The filler, dispersant, ion conductive material, etc. that may be included in the negative electrode coating layer may be known materials generally used in all-solid-state batteries.

According to an embodiment, the negative electrode may further include a lithium-containing layer between the current collector and the negative electrode catalyst layer.

Because the above lithium-containing layer is a metal layer including lithium, it may act as a lithium reservoir.

The lithium-containing layer may be a lithium precipitation layer in which lithium ions deintercalated from the positive electrode active material during charging move toward the negative electrode and are deposited on the surface of the current collector. In this case, the lithium-containing layer may be referred to as a lithium precipitation layer.

The lithium-containing layer may be a layer including lithium or a lithium alloy.

The lithium alloy includes lithium and may also include a metal capable of being alloyed with lithium. The metal capable of being alloyed with the lithium may be Ag, Au, Mg, In, Si, Sn, Al, Ge, Pb, Bi, Sb, a Si-Y alloy (wherein Y is an alkali metal, an alkaline earth metal, a Group 13 element, a Group 14 element, a transition metal, a rare earth element, or a combination thereof, but not Si), a Sn-Y alloy (wherein Y is an alkali metal, an alkaline earth metal, a Group 13 element, a Group 14 element, a transition metal, a rare earth element or a combination thereof, but not Sn), etc. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

A thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer is within the above range, it may properly function as a lithium reservoir and may further improve its cycle-life.

If the lithium-containing layer is a lithium precipitation layer, this lithium precipitation layer may be formed if lithium ions are deintercalated from the positive electrode active material during charging after the all-solid-state battery is manufactured, pass through the solid electrolyte, and move toward the negative electrode, resulting in lithium precipitation and deposition on the negative electrode current collector.

The charging process may be a formation process performed 1 time to 3 times at 0.05 C to 1 C at about 25 °C to 50 °C. Because lithium included in the lithium-containing layer is ionized and moves toward the positive electrode during discharge, this lithium may be used as a negative electrode active material.

In an embodiment, because the lithium-containing layer is present between the current collector and the negative electrode active material layer, the negative electrode catalyst layer may serve as a protective layer for the lithium-containing layer, thereby suppressing the precipitation growth of lithium dendrites. As a result, short circuiting and capacity reduction of the all-solid-state battery may be suppressed, and as a result, the cycle-life of the all-solid-state battery may be improved.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet. A thickness of the negative electrode current collector may be 1 µm to 20 µm, 5 µm to 15 µm, or 7 µm to 10 µm.

The current collector may include a metal as a substrate and may further include a thin film formed on the substrate. The thin film may include an element that may form an alloy with lithium, and may be, for example, gold, silver, zinc, tin, indium, silicon, aluminum, bismuth, or a combination thereof, but is not limited thereto, and in the technical field, any element that may form an alloy with lithium may be used. If the current collector further includes the thin film and the lithium-containing layer is formed by precipitating during charging, a more flattened lithium-containing layer may be formed, thereby further improving the cycle-life of the all-solid-state battery.

A thickness of the thin film may be 1 nm to 800 nm, 10 nm to 700 nm, 50 nm to 600 nm, or 100 nm to 500 nm. If the film thickness is within the above range, the cycle-life characteristics may be further improved.

According to this embodiment, a negative electrode may be formed by applying and drying a negative electrode coating layer composition to a current collector. The negative electrode coating layer composition may include M-X, M, amorphous carbon, and a solvent. The M-X and the amorphous carbon are as described above. Additionally, the solvent may be water or N-methyl pyrrolidone. The drying process may be carried out at 50 °C to 100 °C and may also be carried out under vacuum conditions.

If forming the negative electrode coating layer into the first region and the second region, it may be formed through a manufacturing process performed twice or more.

If an all-solid-state battery including such a negative electrode is charged and discharged, M-X included in the negative electrode coating layer reacts with lithium moved from the negative electrode to form Li-X, so that Li-X exists in the negative electrode coating layer.

Another embodiment provides an all-solid-state battery including the negative electrode, a positive electrode, and a solid electrolyte layer between the negative electrode and the positive electrode.

The solid electrolyte in the solid electrolyte layer may be an inorganic solid electrolyte such as a sulfide-based solid electrolyte, an oxide-based solid electrolyte, or a halide-based solid electrolyte, or a solid polymer electrolyte.

In an embodiment, the sulfide-based solid electrolyte may be, for example Li₂S-P₂S₅, Li₂S-P₂S₅-LiX (wherein X is a halogen element, for example I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (wherein m and n are integers of 0 or more and 12 or less and Z is one of Ge, Zn, or Ga), Li₂S-GeS₂, Li₂S-SiS₂-Li₃PO₄, Li₂S-SiS₂-LiₚMO_{q} (wherein p and q are each 0 or more and 12 or less and M is one of P, Si, Ge, B, Al, Ga, or In), or LiₐM_{b}P_{c}S_{d}Aₑ (wherein a, b, c, d, and e are each 0 or more and 12 or less, M is Ge, Sn, Si, or a combination thereof, and A is one of F, Cl, Br, or I). For example, it may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). In addition, specifically, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, and the like.

For example, the sulfide-based solid electrolyte may be an argyrodite-type sulfide-based solid electrolyte. The sulfide-based solid electrolyte may be, for example, LiₐM_{b}P_{c}S_{d}Aₑ (wherein a, b, c, d and e are all 0 or more and 12 or less, M is Ge, Sn, Si, or a combination thereof, and A is F, Cl, Br, or I), and specifically, Li₃PS₄, Li₇P₃S₁₁, Li₇PS₆, Li₆PS₅Cl, Li₆PS₅Br, Li₆PS₅I, Li_{5.8}PS_{4.8}Cl_{1.2}, Li_{6.2}PS_{5.2}Br_{0.8}, etc.

The sulfide-based solid electrolyte may be amorphous, crystalline, or a mixed state thereof. The sulfide-based solid electrolyte may be obtained by, for example, mixing Li₂S and P₂S₅ in a mole ratio of 50:50 to 90:10 or 50:50 to 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. Mechanical milling or a solution method may be applied as a mixing method. The mechanical milling is to make starting materials into particulates by putting the starting materials, ball mills, and the like in a reactor and fervently stirring them. The solution method may be performed by mixing the starting materials in a solvent to obtain a solid electrolyte as a precipitate. Additionally, additional firing may be performed after mixing. If additional firing is performed, the crystals of the solid electrolyte may become more solid.

Of course, a commercially available solid electrolyte may be used as the sulfide-based solid electrolyte.

The oxide-based solid electrolyte may be, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M = Te, Nb, or Zr, and x is an integer of 1 to 10), or a mixture thereof.

The solid polymer electrolyte may include, for example, one or more selected from polyethylene oxide, poly(diallyldimethylammonium) trifluoromethanesulfonylimide (poly(diallyldimethylammonium)TFSI), Cu₃N, Li₃N, LiPON, Li₃PO₄ · Li₂S · SiS₂, Li₂S · GeS₂ · Ga₂S₃, Li₂O · 11Al₂O₃, Na₂O · 11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicates, Li_{0.3}La_{0.5}TiO₃, Na₅MSi₄O₁₂ (wherein M is a rare earth element of Nd, Gd, Dy, and the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (0≤x≤0.8, 0≤y≤1.0, and M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), and Li₇₊ₓAₓLa₃₋ₓZr₂O₁₂ (0<x<3, and A is Zn).

The halide-based solid electrolyte may include a Li element, an M element (M is a metal other than Li), and an X element (X is a halogen). Examples of X may include F, Cl, Br, and I. In particular, in the halide-based solid electrolyte, at least one of Br and Cl is suitable as the above X. In addition, examples of M may include metal elements such as Sc, Y, B, Al, Ga, and In.

A composition of the halide-based solid electrolyte is not particularly limited, but may be represented by Li₆₋₃ₐMₐBr_{b}Cl_{c} (where M is a metal other than Li, 0<a<2, 0≤b≤6, 0≤c≤6, and b+c=6). At this time, a may be 0.75 or more, 1 or more, and a may be 1.5 or less. The b may be 1 or more, and may be 2 or more. Additionally, c may be 3 or more, and may be 4 or more. Specific examples of the halide-based solid electrolyte may be Li₃YBr₆, Li₃YCl₆, or Li₃YBr₂Cl₄.

The solid electrolyte may in the form of particles, and an average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. At this time, the binder may be a styrene butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. A forming process of the solid electrolyte layer is well known in the art, and thus a detailed description thereof will be omitted.

The positive electrode includes a positive electrode current collector and a positive electrode active material layer on one surface of the positive electrode current collector. The positive electrode active material layer may include a positive electrode active material. The positive electrode active material may be a lithiated compound capable of reversibly intercalating and deintercalating lithium ions, or may be a sulfur-based compound.

The lithiated compound may be, for example, at least one of a composite oxide of lithium and a metal selected from cobalt, manganese, nickel, and a combination thereof. Examples of the lithiated compound may include LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤0.5); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤ 0.5, 0.001≤d≤0.1); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the above chemical formulas, A is Ni, Co, Mn, or a combination thereof; B¹ is Al, Ni, Co, Mn, Cr, Fe, Mg, Sr, V, a rare earth element, or a combination thereof; D' is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al, or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In addition, as the coating layer, any known coating layer for the positive electrode active material of an all-solid-state battery may be applied, examples of which include Li₂O-ZrO₂ (LZO).

In addition, if the positive electrode active material includes nickel, cobalt and manganese, or nickel, cobalt and aluminum, the capacity density of the all-solid-state battery may be further improved and metal elution from the positive electrode active material in the charged state may be further reduced. Because of this, the long-term reliability and cycle characteristics of the all-solid-state battery may be further improved in a charged state.
The sulfur-based compound may be elemental sulfur (S₈), solid Li₂Sₙ (n≤1), catholyte including dissolved Li₂Sₙ (n≤1), an organosulfur compound, a carbon-sulfur polymer [(C₂Sₓ)ₙ, x=2.5 to 50, n≤2), or a combination thereof.

Here, examples of the shape of the positive electrode active material include particle shapes such as spheres and ellipsoids-spheres. Additionally, the average particle diameter of the positive electrode active material is not particularly limited, and may be within a range applicable to the positive electrode active material of existing all-solid-state rechargeable batteries. Additionally, the amount of the positive electrode active material in the positive electrode active material layer is not particularly limited, and may be within a range applicable to the positive electrode layer of an existing all-solid-state rechargeable batteries.

The positive electrode active material layer may further include a solid electrolyte. The solid electrolyte included in the positive electrode active material layer may be the aforementioned solid electrolyte, and in this case, it may be the same as or different from the solid electrolyte included in the solid electrolyte layer. The solid electrolyte may be included in an amount of 10 wt% to 30 wt% based on a total weight of the positive electrode active material layer.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The positive electrode active material layer may further include a binder and/or a conductive material.

The binder may include polyvinyl alcohol, carboxymethyl cellulose, hydroxypropyl cellulose, diacetyl cellulose, polyvinylchloride, carboxylated polyvinylchloride, polyvinyl fluoride, polyethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The binder may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the binder may sufficiently exhibit adhesive ability without deteriorating battery performance.

The conductive material is used to impart conductivity to the electrode, and any material that does not cause chemical change and conducts electrons may be used in the battery. Examples thereof may include a carbon-based material such as natural graphite, artificial graphite, carbon black, acetylene black, ketjen black, a carbon fiber, a carbon nanotube, and the like, a metal-based material including copper, nickel, aluminum, silver, etc. and in the form of a metal powder or a metal fiber, a conductive polymer such as a polyphenylene derivative, or a mixture thereof.

The conductive material may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the conductive material may improve electrical conductivity without deteriorating battery performance.

A thickness of the positive electrode active material layer may be 90 µm to 200 µm. For example, the thickness of the positive electrode active material layer may be 90 µm to 190 µm, 100 µm to 190 µm, 120 µm to 180 µm, or 130 µm to 180 µm. As described above, because the thickness of the positive electrode active material layer is thicker than that of the negative electrode active material layer, the capacity of the positive electrode is greater than that of the negative electrode.

The positive electrode may be manufactured by forming a positive electrode active material layer on a positive electrode current collector by dry or wet coating.

In an embodiment, a cushioning material may be additionally included to buffer thickness changes that occur if the all-solid-state battery is charged and discharged. The cushioning material may be present between the negative electrode and the case, and in the case of a battery in which one or more electrode assemblies are stacked, it may be present between different electrode assemblies.

The cushioning material may include a material that has an elastic recovery rate of 50% or more and has an insulating function, and specifically includes a silicone rubber, an acrylic rubber, a fluorine-based rubber, nylon, a synthetic rubber, or a combination thereof. The cushioning material may be present in the form of a polymer sheet.

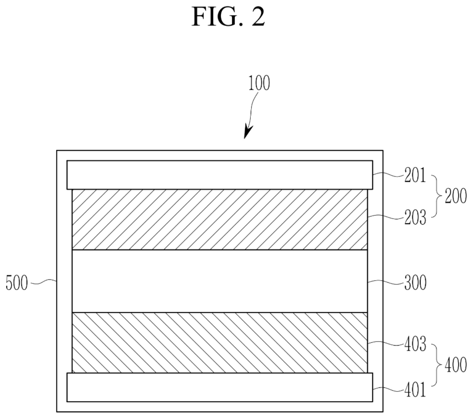

FIG. 2 is a cross-sectional view of an all-solid-state battery according to an embodiment. Referring to FIG. 2, the all-solid-state battery 100 includes an electrode assembly in which a negative electrode 400 including a negative electrode current collector 401 and a negative electrode coating layer 403, a solid electrolyte layer 300, and a positive electrode 200 including a positive electrode active material layer 203 and the positive electrode current collector 201 are stacked and a case such as a pouch housing the electrode assembly. The all-solid-state battery 100 may further include an elastic layer 500 on the outside of at least one of the positive electrode 200 and the negative electrode 400. Although FIG. 2 shows one electrode assembly including the negative electrode 400, the solid electrolyte layer 300, and the positive electrode 200, an all-solid-state battery may also be manufactured by stacking two or more electrode assemblies.

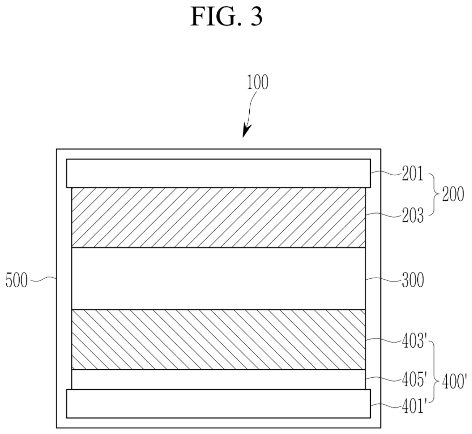

FIG. 3 schematically illustrates the structure of an all-solid-state battery in a charging state. An all-solid-state battery 100 includes a positive electrode 200 including a positive electrode current collector 201 and a positive electrode active material layer 203, a negative electrode 400' including a negative electrode current collector 401', a negative electrode coating layer 403', and a solid electrolyte layer 300 between the positive electrode 200 and the negative electrode 400', and a battery case 500 in which these are accommodated.

Additionally, lithium ions are deintercalated from the positive electrode active material and deposited on the negative electrode current collector 401', and as a result, a lithium-containing layer 405' is disposed between the current collector 401' and the negative electrode coating layer 403'.

An all-solid-state battery according to an embodiment may be manufactured by placing a negative electrode, a positive electrode, and a solid electrolyte layer between the negative electrode and the positive electrode, preparing a stack, and pressing the stack.

The pressing process may be performed in the range of 25 °C to 90 °C.
Additionally, the pressing process may be performed by pressing at a pressure of less than or equal to 550 MPa, for example less than or equal to 500 MPa, for example 1 MPa to 500 MPa. The pressing time may vary depending on temperature and pressure, and may be, for example, less than 30 minutes. The pressing process may be, for example, an isostatic press, a warm isostatic press, a roll press, or a plate press.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Manufacturing of Negative Electrode

81 wt% of carbon black, 2 wt% of Ag (average particle diameter: 60 nm), 7 wt% of AgF, and 10 wt% of polyvinylidene fluoride were mixed in an N-methyl pyrrolidone (NMP) solvent to prepare a negative electrode coating layer first slurry.

85 wt% of carbon black, 2 wt% of Ag (average particle diameter: 60 nm), 3 wt% of AgF, and 10 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry is coated and then, vacuum-dried at 80 °C to manufacture a negative electrode including a 5 µm-thick first region and a 5 µm-thick second region.

### (2) Manufacturing of Solid Electrolyte Layer

To an argyrodite-type solid electrolyte of Li₆PS₅Cl, an isobutyryl isobutyrate binder solution (a solid content: 50 wt%) prepared by adding an acrylate-based polymer of butyl acrylate was added and then, mixed. Here, the solid electrolyte and the binder were mixed in a weight ratio of 98.7: 1.3.

The mixing process was performed by using a Thinky mixer. Subsequently, 2 mm zirconia balls were added to the obtained mixture and then, stirred again by using a Thinky mixer to prepare slurry. The slurry was cast on a polytetrafluoroethylene release film and then, dried at room temperature to manufacture a 100 µm-thick solid electrolyte layer.

### (3) Manufacturing of All-solid-state Half-cell

The manufactured negative electrode, the solid electrolyte, and a lithium metal counter electrode were sequentially stacked and then, subjected to a warm isostatic press process under a pressure of 500 Mpa at 25 °C to manufacture an all-solid-state half-cell.

### (Example 2)

73 wt% of carbon black, 5 wt% of Ag (average particle diameter: 60 nm), 15 wt% of AgF, and 7 wt% of polyvinylidene fluoride were mixed in an N-methyl pyrrolidone (NMP) solvent to prepare a negative electrode coating layer first slurry.

83 wt% of carbon black, 5 wt% of Ag (average particle diameter: 60 nm), AgF 5 wt%, and 7 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 5 µm-thick first region and a 5 µm-thick second region.

The negative electrode, the solid electrolyte layer according to Example 1, and a lithium metal counter electrode were used to manufacture an all-solid-state half-cell.

### (Example 3)

43 wt% of carbon black, 4 wt% of Ag (average particle diameter: 60 nm), 48 wt% of AgF, and 5 wt% of polyvinylidene fluoride were mixed in an N-methyl pyrrolidone (NMP) solvent to prepare a negative electrode coating layer first slurry.

80 wt% of carbon black, 4 wt% of Ag (average particle diameter: 60 nm), 5 wt% of AgF, and 10 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 3 µm-thick first region and a 6 µm-thick second region.

The negative electrode, the solid electrolyte layer according to Example 1, and a lithium metal counter electrode were used to manufacture an all-solid-state half-cell.

### (Example 4)

30 wt% of carbon black, 5 wt% of Ag (average particle diameter: 60 nm), 60 wt% of AgF, and 5 wt% of polyvinylidene fluoride were mixed in an N-methyl pyrrolidone (NMP) solvent to prepare a negative electrode coating layer second slurry.

75 wt% of carbon black, 5 wt% of Ag (average particle diameter: 60 nm), 15 wt% of AgF, and 5 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 3 µm-thick first region and a 6 µm-thick second region.

The negative electrode, the solid electrolyte layer according to Example 1, and a lithium metal counter electrode were used to manufacture an all-solid-state half-cell.

### (Example 5)

18 wt% of carbon black, 2 wt% of Ag (average particle diameter: 60 nm), 75 wt% of AgF, and 5 wt% of polyvinylidene fluoride were mixed in an N-methyl pyrrolidone (NMP) solvent to prepare a negative electrode coating layer first slurry.

68 wt% of carbon black, 2 wt% of Ag (average particle diameter: 60 nm), 25 wt% of AgF, and 5 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 4 µm-thick first region and a 4 µm-thick second region.

The negative electrode, the solid electrolyte layer according to Example 1, and a lithium metal counter electrode were used to manufacture an all-solid-state half-cell.

### (Example 6)

25 wt% of carbon black, 2 wt% of Ag (average particle diameter: 60 nm), 70 wt% of AgF, and 3 wt% of polyvinylidene fluoride were mixed in an N-methyl pyrrolidone (NMP) solvent to prepare a negative electrode coating layer first slurry.

45 wt% of carbon black, 2 wt% of Ag (average particle diameter: 60 nm), 50 wt% of AgF, and 3 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 4 µm-thick first region and a 4 µm-thick second region.

The negative electrode, the solid electrolyte layer according to Example 1, and a lithium metal counter electrode were used to manufacture an all-solid-state half-cell.

### (Comparative Example 1)

86 wt% of carbon black, 3 wt% of Ag (average particle diameter: 60 nm), 1 wt% of AgF, and 10 wt% of polyvinylidene fluoride were mixed in an N-methyl pyrrolidone (NMP) solvent to prepare a negative electrode coating layer first slurry.

87 wt% of carbon black, 3 wt% of Ag (average particle diameter: 60 nm), 0 wt% of AgF, and 10 wt% of polyvinylidene fluoride were mixed in an N-methyl pyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 3 µm-thick first region and a 7 µm-thick second region.

The negative electrode, the solid electrolyte layer according to Example 1, and a lithium metal counter electrode were used to manufacture an all-solid-state half-cell.

### (Comparative Example 2)

87 wt% of carbon black, 3 wt% of Ag (average particle diameter: 60 nm), 0 wt% of AgF, and 10 wt% of polyvinylidene fluoride were mixed in an N-methylpyrrolidone (NMP) solvent to prepare a negative electrode coating layer first slurry.

86 wt% of carbon black, 3 wt% of Ag (average particle diameter: 60 nm), 1 wt% of AgF, and 10 wt% of polyvinylidene fluoride were mixed in an N-methylpyrrolidone (NMP) solvent to prepare a negative electrode coating layer second slurry.

The negative electrode coating layer first slurry was coated on a stainless steel foil current collector and then, vacuum-dried at 80 °C, and the negative electrode coating layer second slurry was coated and then, vacuum-dried at 80 °C to manufacture a negative electrode including a 3 µm-thick first region and a 7 µm-thick second region.

The negative electrode, the solid electrolyte layer according to Example 1, and a lithium metal counter electrode were used to manufacture an all-solid-state half-cell.

### (Comparative Example 3)

82 wt% of carbon black, 3 wt% of Ag (average particle diameter: 60 nm), 5 wt% of AgF, and 10 wt% of polyvinylidene fluoride were mixed in an N-methylpyrrolidone (NMP) solvent to prepare negative electrode coating layer first slurry.

82 wt% of carbon black, 3 wt% of Ag (average particle diameter: 60 nm), 5 wt% of AgF, and 10 wt% of polyvinylidene fluoride were dissolved in an N-methylpyrrolidone (NMP) solvent to prepare a negative electrode coating layer second slurry.

The negative electrode coating layer first slurry was coated on stainless steel foil current collector and vacuum-dried at 80 °C, and the negative electrode coating layer second slurry was coated and then, vacuum-dried at 80 °C to manufacture a negative electrode including a 3 µm-thick first region and a 7 µm-thick second region.

Except for this, the negative electrode, the solid electrolyte layer according to Example 1, and a lithium metal counter electrode were used to manufacture an all-solid-state half-cell.

### (Comparative Example 4)

### (1) Manufacturing of Negative Electrode

85 wt% of carbon black, 2 wt% of Ag (average particle diameter: 60 nm), 3 wt% of AgF, and 10 wt% of polyvinylidene fluoride are mixed in an N-methylpyrrolidone (NMP) solvent to prepare a negative electrode coating layer first slurry.

81 wt% of carbon black, 2 wt% of Ag (average particle diameter: 60 nm), 7 wt% of AgF, and 10 wt% of polyvinylidene fluoride are mixed in an N-methylpyrrolidone (NMP) solvent to prepare negative electrode coating layer second slurry.

The negative electrode coating layer first slurry is coated on a stainless steel foil current collector and then, vacuum-dried at 80 °C, and then, the negative electrode coating layer second slurry is coated thereon and vacuum-dried at 80 °C to manufacture a negative electrode including a 5 µm-thick first region and a 5 µm-thick second region.

The negative electrode, the solid electrolyte layer according to Example 1, and a lithium metal counter electrode were used to manufacture an all-solid-state half-cell.

### (Comparative Example 5)

### (1) Manufacturing of Negative Electrode

63 wt% of carbon black, 2 wt% of Ag (average particle diameter: 60 nm), 25 wt% of AgF, and 10 wt% of polyvinylidene fluoride are mixed in an N-methylpyrrolidone (NMP) solvent to prepare a negative electrode coating layer first slurry.

28 wt% of carbon black, 2 wt% of Ag (average particle diameter: 60 nm), 60 wt% of AgF, and 10 wt% of polyvinylidene fluoride are mixed in an N-methylpyrrolidone (NMP) solvent to prepare a negative electrode coating layer second slurry.

The negative electrode coating layer first slurry is coated on a coating stainless steel foil current collector and vacuum-dried at 80 °C, and the negative electrode coating layer second slurry is coated and vacuum-dried at 80 °C to manufacture a negative electrode including a 5 µm-thick first region and a 5 µm-thick second region.

The negative electrode, the solid electrolyte layer of Example 1, and a lithium metal counter electrode were used to manufacture an all-solid-state half-cell.

### Experimental Example 1) Overvoltage Evaluation

The all-solid-state half-cells according to Examples 1 to 6 and Comparative Examples 1 to 4 were once charged at 0.05 C. The cells were measured with respect to a voltage, which started to drop at OCV (open circuit voltage, about 2.5 V) up to a point where an inflection point occurred voltage at about 0 mV. The measured results are shown as overvoltage in Table 1.

### Experimental Example 2) Initial Efficiency Evaluation

The all-solid-state half-cells according to Examples 1 to 6 and Comparative Examples 1 to 4 were once charged and discharged at 0.05 C. A ratio of discharge capacity to charge capacity (1st discharge capacity/1st charge capacity) was calculated, and the results are shown as initial efficiency in Table 1.

### Experimental Example 3) Power Efficiency Evaluation

The all-solid-state half-cells according to Examples 1 to 6 and Comparative Examples 1 to 4 were once charged and discharged at 0.1 C. A ratio of discharge capacity to charge capacity (1st discharge capacity/1st charge capacity) was calculated, and the results are shown as power efficiency in Table 1.

**(Table 1)**

| | Overvoltage (mV) | Initial efficiency (%) | Power efficiency (%) |
|---|---|---|---|
| Example 1 | 9.6 | 95.7 | 95.0 |
| Example 2 | 8.8 | 96.2 | 96.2 |
| Example 3 | 8.6 | 96.5 | 96.2 |
| Example 4 | 8.4 | 95.6 | 96.0 |
| Example 5 | 8.8 | 95.7 | 95.2 |
| Example 6 | 9.2 | 95.6 | 93.9 |
| Comparative Example 1 | 10.5 | 92.4 | 90.2 |
| Comparative Example 2 | 11.5 | 94.5 | 93.7 |
| Comparative Example 3 | 10.2 | 95.2 | 89.1 |
| Comparative Example 4 | 11.3 | 95.7 | 88.7 |
| Comparative Example 5 | 9.4 | 92.1 | 87.7 |

As shown in Table 1, the solid-satate half-cells having a larger AgF amount in the first region than in the second region according to Examples 1 to 6 exhibited excellent overvoltage characteristics, initial efficiency, and power efficiency. On the contrary, Comparative Examples 1 and 2 including AgF in either one region of the first region or the second region exhibited deteriorated overvoltage characteristics, initial efficiency, and power efficiency. In addition, Comparative Example 3 including the same amount of AgF in the first region and the second region and Comparative Examples 4 and 5 including a larger amount of AgF in the second region than in the first region exhibited very deteriorated output power efficiency.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A negative electrode for an all-solid-state battery, comprising
a current collector; and
a negative electrode coating layer on the current collector,
wherein the negative electrode coating layer includes a first region adjacent to the current collector and a second region not adjacent to the current collector,
the first region and the second region include M-X (M is a metal reactive with lithium, and X is a halogen or a nitride), M, and amorphous carbon, and
an amount of M-X included in the first region is greater than an amount of M-X included in the second region.

2. The negative electrode for an all-solid-state battery as claimed in claim 1, wherein the M is Ag, Au, Sn, Zn, Al, Mg, Ge, Cu, In, Ni, Bi, Pt, Pd, or a combination thereof.

3. The negative electrode for an all-solid-state battery as claimed in claim 1, wherein the M is Ag.

4. The negative electrode for an all-solid-state battery as claimed in claim 1, wherein the X is F, Cl, Br, I, NO₃, NO₂, N, or a combination thereof.

5. The negative electrode for an all-solid-state battery as claimed in claim 1, wherein the M-X is AgF, AgNO₃, AgNO₂, Ag₃N, or a combination thereof.

6. The negative electrode for an all-solid-state battery as claimed in claim 1, wherein the amount of M-X included in the first region is 2 wt% to 80 wt% based on 100 wt% of the total first region.

7. The negative electrode for an all-solid-state battery as claimed in claim 1, wherein the amount of M-X included in the second region is 1 wt% to 50 wt% based on 100 wt% of the total second region.

8. The negative electrode for an all-solid-state battery as claimed in claim 1, wherein a ratio of the amount of M-X included in the first region to the amount of M-X included in the second region is 1.2:1 to 10:1.

9. The negative electrode for an all-solid-state battery as claimed in claim 1, wherein the amount of M included in the first region is 1 wt% to 45 wt% based on 100 wt% of the total first region.

10. The negative electrode for an all-solid-state battery as claimed in claim 1, wherein the amount of M included in the second region is 1 wt% to 45 wt% based on 100 wt% of the total second region.

11. The negative electrode for an all-solid-state battery as claimed in claim 1, wherein a thickness of the first region is greater than or equal to 20% and less than 80% in the thickness direction based on 100% of the total thickness of the negative electrode coating layer.

12. The negative electrode for an all-solid-state battery as claimed in claim 1, wherein the amount of the M-X is 5 to 70 wt% based on 100 wt% of the total negative electrode coating layer.

13. The negative electrode for an all-solid-state battery as claimed in claim 1, wherein a thickness of the first region is 20% to 50% in the thickness direction based on 100% of the total thickness of the negative electrode coating layer.

14. The negative electrode for an all-solid-state battery as claimed in claim 1, wherein the amorphous carbon includes carbon black, acetylene black, denka black, ketjen black, furnace black, activated carbon, or a combination thereof.

15. An all-solid-state battery, comprising
the negative electrode as claimed in any one of claim 1 to claim 14;
a positive electrode; and
a solid electrolyte layer between the negative electrode and the positive electrode.

16. The all-solid-state battery as claimed in claim 15, wherein the negative electrode further includes a lithium-containing layer between the current collector and the negative electrode catalyst layer.
